# EUROPÄISCHE PATENTANMELDUNG

(11) **EP 1 095 686 A1**
(43) Veröffentlichungstag der Anmeldung: **02.05.2001**
(21) Anmeldenummer: 00121415.4
(22) Anmeldetag: 29.09.2000
(51) Int. Cl.: B01D 19/00, D21D 5/26

(54) **Verfahren und Vorrichtung zur Entgasung einer Papierstoffsuspension**

(30) Priorität: 29.10.1999 DE 19952129
(71) Anmelder: Voith Paper Patent GmbH, 89522 Heidenheim (DE)
(72) Erfinder: Gmeiner, Anton, 88214 Ravensburg (DE); Schwarz, Michael, Dr., 89522 Heidenheim (DE)

(57) **Zusammenfassung**

Das Verfahren dient der Entgasung, insbesondere Entlüftung von einer fließenden Papierfasersuspension (1). Die Entgasung wird bei einem relativ starken Unterdruck durchgeführt, vorzugsweise dem, der dem Dampfdruck bei der herrschenden Temperatur entspricht Erfindungsgemäß wirkt der zur Entgasung erforderliche Unterdruck mindestens 10 sec. lang auf die Papierfasersuspension (1) ein. In einer bevorzugten Ausführungsform wird die Entgasungszeit durch einen entsprechend lang durchströmten Vorentgasungsraum (5) eingestellt.

## Beschreibung

Die Erfindung bezieht sich auf ein Verfahren zur Entgasung einer Papierstoffsuspension der in dem Oberbegriff des Patentanspruchs 1 angegebenen Art.

Gasblasen in der Stoffsuspension verschlechtern die Papierqualität und fördern unerwünschte Pulsationen. Daher ist eine Entgasung erforderlich, vor allem bei schnelllaufenden Papiermaschinen, an denen Papiersorten wie z.B. für Zeitungsdruck, LWC, Streichdruck u.ä. aus Suspensionen mit Rohstoffen, wie z.B. Holzschliff, deinktem, sortierten Altpapier oder Zellstoff hergestellt werden. Die enthaltenen Gase bestehen in der Regel aus Luft. Üblicherweise erfolgt die Entgasung dadurch, dass die Suspension versprüht und einem Unterdruck ausgesetzt wird. Dieser Unterdruck wird dabei möglichst hoch eingestellt, vorzugsweise bis an den Wasserdampfdruck heran.

Aus der DE 41 06 140 A1 ist ein Verfahren zur Entgasung einer Papierstoffsuspension bekannt, bei dem die Suspension in eine Anzahl von Teilstrahlen aufgeteilt und dann in einem Entgasungsraum versprüht wird. Mit Hilfe der dort vorgeschlagenen hohen Anzahl von sehr kleinen Teilstrahlen soll eine möglichst gute Entgasung erfolgen. Ein solches Verfahren hat zwar durchaus einen akzeptablen Effekt, ist aber aufwendig, sowohl was den Energieverbrauch als auch den apparativen Aufwand betrifft.

Der Erfindung liegt die Aufgabe zu Grunde, ein Entgasungsverfahren zu schaffen, mit dem der Entgasungseffekt weiter verbessert werden und der dazu erforderliche Aufwand, insbesondere der Energiebedarf, reduziert werden kann.

Diese Aufgabe wird durch die im Kennzeichen des Anspruchs 1 genannten Merkmale vollständig gelöst.

Mit Hilfe des neuen Verfahrens wird die zu entgasende Papierfasersuspension unter relativ großem Unterdruck gehalten, und zwar in einem Zeitraum, dessen Länge ein Vielfaches von dem der bisher bekannten Verfahren beträgt. Dabei werden spezielle Phänomene berücksichtigt, die offensichtlich mit der Natur von suspendierten, gashaltigen Papierfasern zusammenhängen. Es ergeben sich nämlich in überraschender Weise besondere Vorteile, wenn dem gelösten oder an den Fasern angelagerten Gas eine größere Zeit gegeben wird, sich heraus- bzw. abzulösen und als Gasblase auszubilden. Hierdurch kann der Entgasungseffekt verbessert werden, was z.B. dazu führt, dass die Anforderungen an die sich anschließende Entgasung im Entgasungsraum gesenkt werden können. Die Aufteilung in Teilstrahlen und Versprühung im Entgasungsraum ist sowohl apparativ als auch energetisch aufwendig. Wird dagegen die Faserstoffsuspension bereits vorher unter Unterdruck gesetzt, kann dabei entweder ein Teil der Gase bereits entfernt oder zumindest schon so weit aus dem Faserverbund herausgebracht werden, dass die nachfolgende Entgasung im Entgasungsraum leichter geht. Die Verlängerung des Unterdruck-Zeitraumes kann aber auch nach der Versprühung, z.B. in einem Nachentgasungsraum erfolgen.

Ein weiterer Vorteil kann dadurch erzielt werden, dass im Vorentgasungsraum durch entsprechende Strömungsführung Scherströmungen erzeugt werden, die die bereits frei werdenden Gasblasen noch besser aus dem Fasergefüge heraustreiben. Hierzu können mit Vorteil Strömungseinbauten verwendet werden, die z.B. aus statischen Mischem bekannt sind.

Bei der Gestaltung des den Vor- oder Nachentgasungsraum bildenden Apparates sollte darauf geachtet werden, dass die erforderliche Verweilzeit für alle Teile der Faserstoffsuspension eingehalten wird, indem also unerwünschte Kurzschlussströmungen oder Vermischungen vermieden werden. Die hierfür erforderlichen Maßnahmen sind dem Strömungsfachmann bekannt. Sie können so gestaltet sein, dass sie auch zu den erwähnten Scherströmungen in der Suspension beitragen.

Eine weitere Verbesserung bietet sich dann, wenn die Teilstrahlen im Entgasungsraum nach unten gerichtet werden, weil sie dadurch einen geringeren Druckverlust an der die Teilstrahlen erzeugenden Vorrichtung, z.B. einer Lochplatte, verursachen. Ausgehend von einem maximalen Unterdruck im Entgasungsraum (also dem Dampfdruck) führt das zu einem höheren Unterdruck bei der Vorentgasung.

Die Erfindung und ihre Vorteile werden beschrieben an Hand von Zeichnungen. Dabei zeigen:
- Fig. 1: schematisch: Eine Anlage zur Durchführung des erfindungsgemäßen Verfahrens mit Vorentgasung;

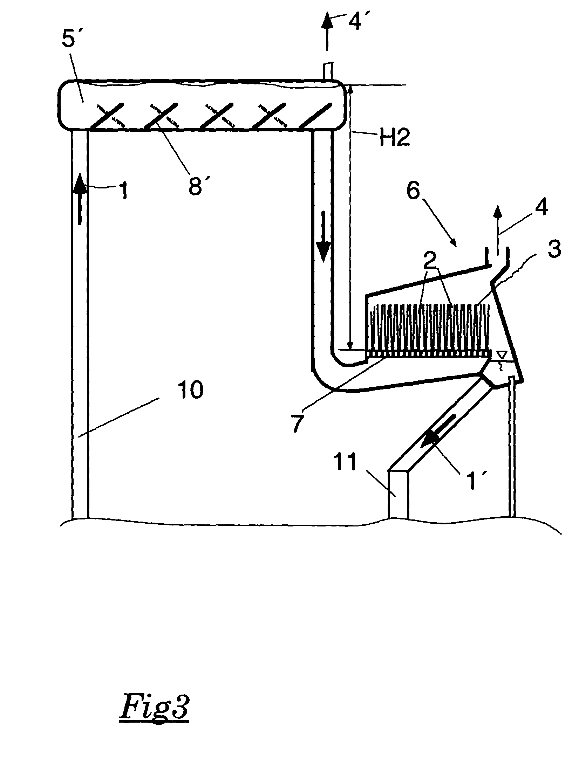

- Fig. 2 und 3: je eine Variante des erfindungsgemäßen Verfahrens;
- Fig. 4: eine Variante mit Nachentgasung.

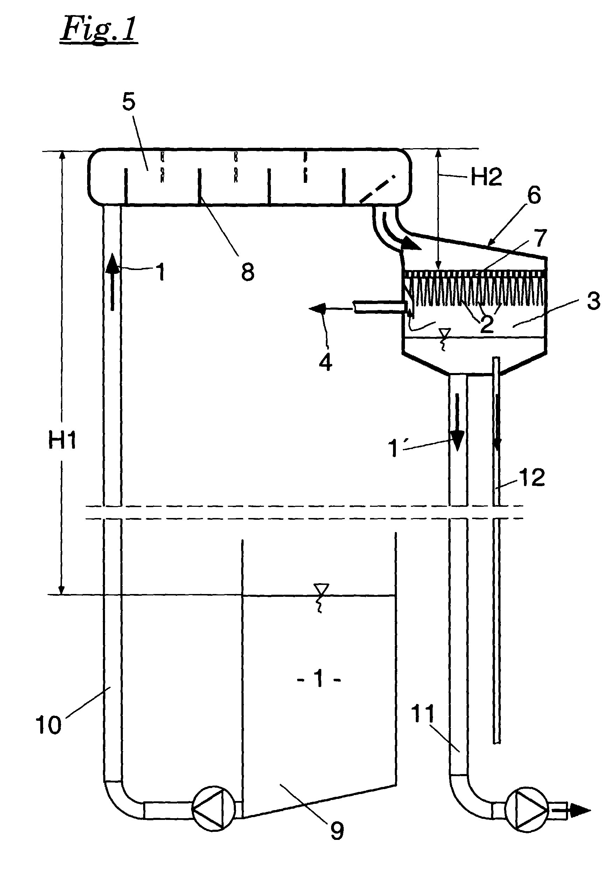

Bei der Durchführung des Verfahrens in einer Anlage gemäß Fig. 1 wird die Papierfasersuspension 1 aus einer Bütte 9 durch eine Steigleitung 10 zunächst in den Vorentgasungsraum 5 gepumpt. Dabei wird eine Steighöhe H1 überwunden, die üblicherweise bei ca. 10 bis 12 m liegt. Der Vorentgasungsraum 5 liegt mit Vorteil waagerecht, um das geodätische Niveau für die ganze Vorentgasung nutzen zu können. Im Vorentgasungsraum 5 befindet sich eine Anzahl von Einbauten 8, mit denen das Durchschießen der Suspension verhindert werden kann, um die für die Entgasung erforderliche Verweilzeit für alle Teile der Suspension zu gewährleisten. Aus dem Vorentgasungsraum 5 wird die Suspension in einen Sprühbehälter 6 geleitet, in dem sie zuerst die Siebplatte 7 passiert und dabei in eine größere Anzahl von Teilstrahlen 2 aufgeteilt wird. Die Siebplatte 7 hat zum Niveau des Vorentgasungsraumes die Fallhöhe H2. Unterhalb der Siebplatte 7 befindet sich der Entgasungsraum 3, aus dem das Gas 4 abgesaugt wird. Diese Absaugung ist nur funktional angedeutet. Sie kann z.B. auch durch ein von oben durch die Siebplatte 7 durchgestecktes Rohr erfolgen. In der Regel müssen auch - an sich bekannte - Einbauten vorhanden sein, mit denen die vom Gas mitgeschleppte Flüssigkeit zurückgehalten wird. Der an der Siebplatte 7 anliegende Unterdruck ist groß genug, um eine wirksame Entgasung der Teilstrahlen 2 zu bewirken. Mit Vorteil entspricht er dem Dampfdruck oder liegt in der Nähe des Dampfdruckes der Suspension, wobei sich dieser natürlich nach ihrer Temperatur richtet. Die entgaste Suspension 1' sammelt sich im unteren Teil des Entgasungsraumes 3 und wird über eine relativ lange Fallleitung 11 zur Papierproduktion weitergeführt. Durch die Fallleitung 11 wird der Unterdruck im Entgasungsraum 3 gehalten.

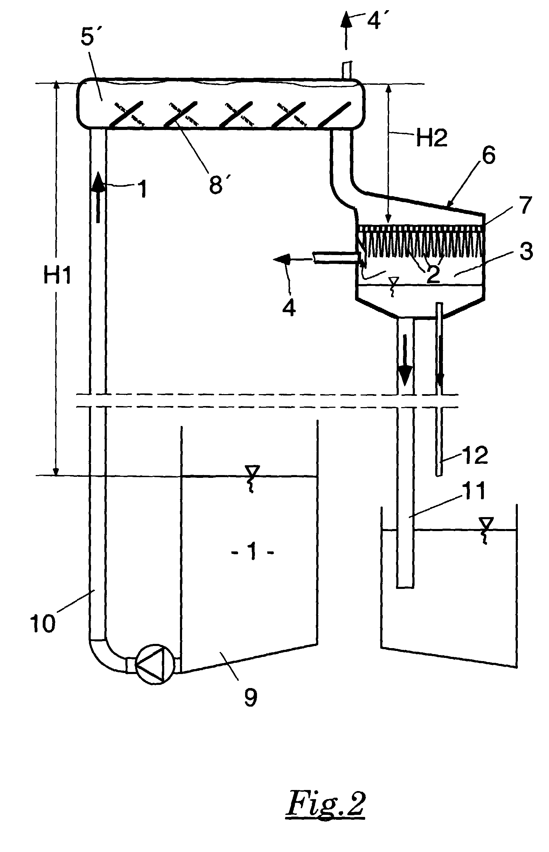

Wenn die Fallhöhe H2 zum Entgasungsraum 3 so gewählt wird, dass sie dem Druckverlust an der Siebplatte 7 entspricht, stellt sich im Vorentgasungsraum 5 etwa derselbe Unterdruck ein wie im Entgasungsraum 3. Die Teilstrahlen 2, die an der Siebplatte 7 gebildet werden, sind hier senkrecht nach unten gerichtet sind. Bei einer solchen Fahrweise kann der Druckverlust an der Siebplatte 7 relativ gering bleiben (unter 0,4 bar, vorzugsweise 0,1 bis 0,2 bar). Das bedeutet, dass die Fallhöhe H2 relativ gering sein kann, was zu einer Platzersparnis in der Höhe der Anlage führt. In anderen Fällen, wo eine solche Platzersparnis nicht von Bedeutung ist, kann - wie in der Fig. 2 exemplarisch gezeigt wird - auch ein höherer Druckverlust einer Siebplatte 7 in Kaut genommen werden. Die Fig. 1 zeigt eine Übertaufleitung 12, die der Regelung dient.

Im Vorentgasungsraum 5 bilden sich auf Grund des dort herrschenden Unterdrucks und während der relativ langen Verweilzeit Gasblasen. Diese werden entweder mit der Suspension mitgeschleppt und in den Entgasungsraum 3 geführt, was natürlich eine Strömungsgeschwindigkeit erfordert, die höher ist als die Steigtendenz der Gasblasen. Es ist aber auch möglich, den Vorentgasungsraum 5' so zu betreiben, dass die Gasblasen aufsteigen und sich im oberen Bereich des diesen Raum bildenden Behälters sammeln. Diese in vielen Fällen vorteilhafte Variante ist in Fig. 2 gezeigt. Man erkennt, dass dort aus dem Vorentgasungsraum 5' die Luft 4' abgesaugt und dann erst die Suspension über die Fallhöhe H2 zur Siebplatte 7 zum Absinken gebracht wird. Die Einbauten 8' fördern das Ablösen der Gasblasen, ohne ihr Aufsteigen zu verhindern. Wie schon erwähnt, ist bei dieser Darstellung auch eine größere Fallhöhe H2 gewählt worden.

In speziellen Fällen, bei denen sowohl der Platz für einen hochangesiedelten Vorentgasungsraum 5' vorhanden ist, als auch eine höhe Pumpenleistung für die Suspension 1, kann eine größere Druckdifferenz an der Siebplatte 7 zur Verfügung gestellt werden. In einem solchen Fall ist auch die an sich bekannte und übliche Strömungsführung der Teilstrahlen 2 nach oben möglich.

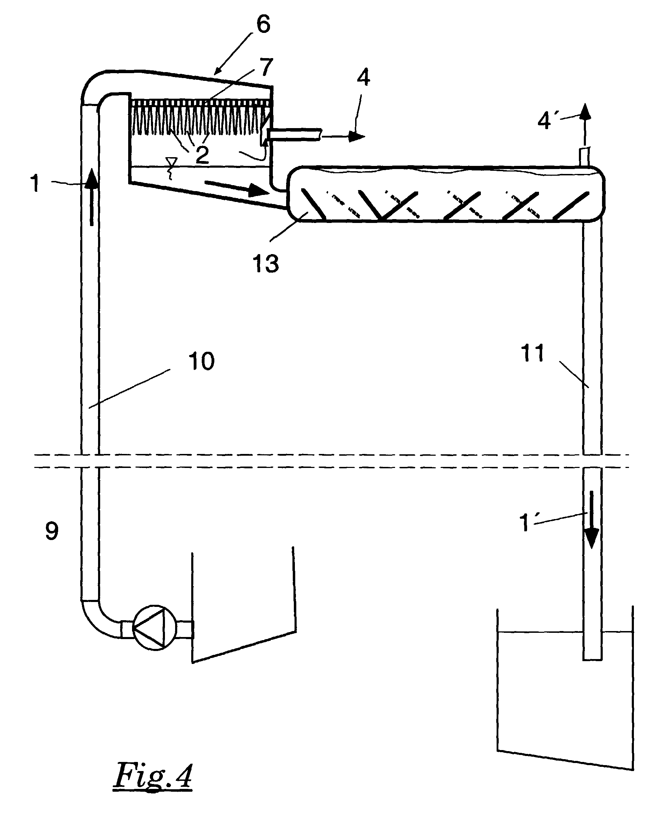

Eine weitere Möglichkeit, die Entgasungszeit entscheidend zu verlängern, zeigt die Fig. 4. Im Gegensatz zu den bisher beschriebenen Beispielen wird bei dieser Lösung die Papierfasersuspension 1 direkt in einen Sprühbehälter 6 geleitet, dessen Entgasungsraum 3 unter den zur Entgasung notwendigen Unterdruck gesetzt ist. Die auf diese Weise behandelte und entgaste Suspension wird anschließend in einen Nachentgasungsraum 13 geführt. Das diesen Nachentgasungsraum 13 einschließende Gefäß ist ähnlich oder identisch mit den bereits für den Vorentgasungsraum beschriebenen Ausführungen. Entscheidend ist wiederum, dass zum einen der notwendige Unterdruck gehalten wird und zum anderen die Entgasungszeit mindestens 10 sec. beträgt. Besonders sinnvoll ist diese Ausgestaltung, wenn aus dem Nachentgasungsraum 13 das Gas 4' gesammelt und abgeführt wird.

## Patentansprüche

1. Verfahren zur Entgasung einer fließenden Papierfasersuspension (1) mit Hilfe von Unterdruck, bei dem die Suspensionen in Teilstrahlen (2) aufgeteilt und in einem unter Unterdruck stehenden Entgasungsraum (3) versprüht wird, wobei das dabei abgesonderte Gas (4), insbesondere Luft, aus dem Entgasungsraum (3) herausgesaugt wird,
**dadurch gekennzeichnet**,
dass die Papierfasersuspension (1) dem zur Entgasung erforderlichen Unterdruck während einer Entgasungszeit von mindestens 10 sec. ausgesetzt wird.

2. Verfahren nach Anspruch 1,
**dadurch gekennzeichnet**,
dass die Entgasungszeit mindestens 30 sec. beträgt.

3. Verfahren nach Anspruch 1 oder 2,
**dadurch gekennzeichnet**,
dass im Entgasungsraum (3) ein Absolutdruck eingestellt wird, der etwa gleich ist dem Dampfdruck der Papierfasersuspension (1) entsprechend der dort herrschenden Temperatur.

4. Verfahren nach Anspruch 3,
**dadurch gekennzeichnet**,
dass der während der ganzen Entgasungszeit eingestellte Druck etwa dem Dampfdruck der Papierfasersuspension (1) entspricht.

5. Verfahren nach einem der voranstehenden Ansprüche,
**dadurch gekennzeichnet**,
dass Bilden und Versprühen der Teilstrahlen (2) so vorgenommen wird, dass dabei der Druckverlust in der Suspension höchstens 0,4 bar beträgt.

6. Verfahren nach Anspruch 5,
**dadurch gekennzeichnet**,
dass Bilden und Versprühen der Teilstrahlen (2) so vorgenommen wird, dass dabei der Druckverlust in der Suspension höchstens 0,15 bar beträgt.

7. Verfahren nach einem der voranstehenden Ansprüche,
**dadurch gekennzeichnet**,
dass die Teilstrahlen (2) nach unten gerichtet sind.

8. Verfahren nach einem der voranstehenden Ansprüche,
**dadurch gekennzeichnet**,
dass die Papierfasersuspension (1) vor der im Entgasungsraum (3) vorgenommenen Entgasung während der Verweilzeit in einem Vorentgasungsraum (5) dem zur Entgasung erforderlichen Unterdruck ausgesetzt wird.

9. Verfahren nach Anspruch 8,
**dadurch gekennzeichnet**,
dass im Vorentgasungsraum (5) ein Absolutdruck von höchstens 0,2 bar eingestellt wird.

10. Verfahren nach einem der Ansprüche 8 oder 9,
**dadurch gekennzeichnet**,
dass die Papierfasersuspension (1) im Vorentgasungsraum (5) so geführt wird,
dass Scherströmungen entstehen, mit deren Hilfe Gasblasen von den Papierfasern getrennt werden.

11. Verfahren nach einem der Ansprüche 8 bis 10,
**dadurch gekennzeichnet**,
dass im Vorentgasungsraum (5) ein Teil der freiwerdenden Gase angesammelt und getrennt von der Papierfasersuspension (1) abgesaugt werden.

12. Verfahren nach einem der Ansprüche 8 bis 11,
**dadurch gekennzeichnet**,
dass die Papierfasersuspension (1) vom Vorentgasungsraum (5) zum Entgasungsraum (3) abwärts geführt wird über eine Fallstrecke mit Höhe (H2) von mindestens 1 m.

13. Verfahren nach einem der Ansprüche 8 bis 12,
**dadurch gekennzeichnet**,
dass der Vorentgasungsraum (5) durch ein waagerecht angeordnetes längliches Gefäß gebildet wird.

14. Verfahren nach einem der Ansprüche 1 bis 7,
**dadurch gekennzeichnet**,
dass die Papierfasersuspension (1) nach der im Entgasungsraum (3) vorgenommenen Entgasung während der Entgasungszeit in einem Nachentgasungsraum (13) dem zur Entgasung erforderlichen Unterdruck ausgesetzt wird.

15. Verfahren nach Anspruch 14,
**dadurch gekennzeichnet**,
dass der Unterdruck im Nachentgasungsraum (13) gleich dem im Entgasungsraum (3) ist.
